# EUROPEAN PATENT APPLICATION

(11) **EP 4 328 787 A1**
(43) Date of publication of application: **28.02.2024**
(21) Application number: 23193074.4
(22) Date of filing: 24.08.2023
(51) Int. Cl.: G06F 30/13, G06F 111/20

(54) **BUILDING ELEMENT PLACEMENT USING SPACE BODIES AND GAPS**

(30) Priority: 26.08.2022 US 202217896735
(71) Applicant: Trimble Inc., Sunnyvale, CA 94085 (US)
(72) Inventor: STRUZYNA, Markus, Sunnyvale, CA 94085 (US); PANTEN, Christian, Sunnyvale,, CA 94085 (US)
(74) Representative: AWA Sweden AB

(57) **Abstract**

Systems and methods are disclosed for placing a set of building elements within a building model. A set of space bodies are defined within a building, where each of the set of space bodies represents a non-overlapping volume within the building. A set of gaps are formed between the set of space bodies. A set of placement rules for the set of building elements are obtained based on physical characteristics of the set of gaps. A set of placements for the set of building elements within the building model are generated in accordance with the set of placement rules.

## Description

### BACKGROUND

The planning and design of connected systems in construction typically includes manual positioning of the building elements as well as the task of connecting them by drawing or modeling connections using a computer-aided design (CAD) or computer-aided engineering (CAE) systems. The positioning and connecting of these building elements can include the relative positioning and relations with respect to some architectural elements, such as walls, slabs, and ceilings, which thus need to be brought manually into the CAD/CAE systems to enable further modeling. The conventional approach is time consuming, prone to errors, and sensitive to changes of the underlying architectural or infrastructure models. Accordingly, new systems, methods, and other techniques for placing building elements are needed.

### SUMMARY

A summary of the various embodiments of the invention is provided below as a list of examples. As used below, any reference to a series of examples is to be understood as a reference to each of those examples disjunctively (e.g., "Examples 1-4" is to be understood as "Examples 1, 2, 3, or 4").

Example 1 is a computer-implemented method of placing a set of building elements within a building model, the method comprising: defining a set of space bodies within a building, wherein each of the set of space bodies represents a non-overlapping volume within the building; forming a set of gaps between the set of space bodies; obtaining a set of placement rules for the set of building elements based on physical characteristics of the set of gaps; and generating a set of placements for the set of building elements within the building model in accordance with the set of placement rules.

Example 2 is the method of example(s) 1, wherein the physical characteristics of the set of gaps include thicknesses of the set of gaps.

Example 3 is the method of example(s) 1-2, wherein obtaining the set of placement rules includes: classifying a set of faces of the set of space bodies to obtain a set of face classifications; and obtaining the set of placement rules for the set of building elements based on both (i) the physical characteristics of the set of gaps and (ii) the set of face classifications.

Example 4 is the method of example(s) 1-3, further comprising: obtaining an interior point cloud using an interior scanning machine, the interior point cloud having been generated using the interior scanning machine by scanning at least one room of the building, wherein the set of space bodies are defined using the interior point cloud.

Example 5 is the method of example(s) 4, further comprising: obtaining an exterior point cloud using an exterior scanning machine, the exterior point cloud having been generated using the exterior scanning machine by scanning an exterior of the building, wherein the set of space bodies are defined further using the exterior point cloud.

Example 6 is the method of example(s) 5, wherein the interior scanning machine and the exterior scanning machine are different scanning machines.

Example 7 is the method of example(s) 1, further comprising: receiving an existing building model, wherein the set of space bodies are defined by analyzing the existing building model.

Example 8 is a system for placing a set of building elements within a building model, the system comprising: one or more processors; and a non-transitory computer-readable medium comprising instructions that, when executed by the one or more processors, cause the one or more processors to perform operations comprising: defining a set of space bodies within a building, wherein each of the set of space bodies represents a non-overlapping volume within the building; forming a set of gaps between the set of space bodies; obtaining a set of placement rules for the set of building elements based on physical characteristics of the set of gaps; and generating a set of placements for the set of building elements within the building model in accordance with the set of placement rules.

Example 9 is the system of example(s) 8, physical characteristics of the set of gaps include thicknesses of the set of gaps.

Example 10 is the system of example(s) 8-9, wherein obtaining the set of placement rules includes: classifying a set of faces of the set of space bodies to obtain a set of face classifications; and obtaining the set of placement rules for the set of building elements based on both (i) the physical characteristics of the set of gaps and (ii) the set of face classifications.

Example 11 is the system of example(s) 8-10, wherein the operations further comprise: obtaining an interior point cloud using an interior scanning machine, the interior point cloud having been generated using the interior scanning machine by scanning at least one room of the building, wherein the set of space bodies are defined using the interior point cloud.

Example 12 is the system of example(s) 11, wherein the operations further comprise: obtaining an exterior point cloud using an exterior scanning machine, the exterior point cloud having been generated using the exterior scanning machine by scanning an exterior of the building, wherein the set of space bodies are defined further using the exterior point cloud.

Example 13 is the system of example(s) 12, wherein the interior scanning machine and the exterior scanning machine are different scanning machines.

Example 14 is the system of example(s) 8, wherein the operations further comprise: receiving an existing building model, wherein the set of space bodies are defined by analyzing the existing building model.

Example 15 is a non-transitory computer-readable medium comprising instructions that, when executed by a processor, cause the processor to perform operations for placing a set of building elements within a building model, the operations comprising: defining a set of space bodies within a building, wherein each of the set of space bodies represents a non-overlapping volume within the building; forming a set of gaps between the set of space bodies; obtaining a set of placement rules for the set of building elements based on physical characteristics of the set of gaps; and generating a set of placements for the set of building elements within the building model in accordance with the set of placement rules.

Example 16 is the non-transitory computer-readable medium of example(s) 15, physical characteristics of the set of gaps include thicknesses of the set of gaps.

Example 17 is the non-transitory computer-readable medium of example(s) 15-16, wherein obtaining the set of placement rules includes: classifying a set of faces of the set of space bodies to obtain a set of face classifications; and obtaining the set of placement rules for the set of building elements based on both (i) the physical characteristics of the set of gaps and (ii) the set of face classifications.

Example 18 is the non-transitory computer-readable medium of example(s) 15-17, wherein the operations further comprise: obtaining an interior point cloud using an interior scanning machine, the interior point cloud having been generated using the interior scanning machine by scanning at least one room of the building, wherein the set of space bodies are defined using the interior point cloud.

Example 19 is the non-transitory computer-readable medium of example(s) 18, wherein the operations further comprise: obtaining an exterior point cloud using an exterior scanning machine, the exterior point cloud having been generated using the exterior scanning machine by scanning an exterior of the building, wherein the set of space bodies are defined further using the exterior point cloud.

Example 20 is the non-transitory computer-readable medium of example(s) 15, wherein the operations further comprise: receiving an existing building model, wherein the set of space bodies are defined by analyzing the existing building model.

### BRIEF DESCRIPTION OF THE DRAWINGS

The accompanying drawings, which are included to provide a further understanding of the invention, are incorporated in and constitute a part of this specification, illustrate embodiments of the invention and together with the detailed description serve to explain the principles of the invention. No attempt is made to show structural details of the invention in more detail than may be necessary for a fundamental understanding of the invention and various ways in which it may be practiced.
FIG. 1 illustrates a building to be modeled.
FIG. 2 illustrates a system for detection and construction of building models.
FIGS. 3A and 3B illustrate examples of an exterior point cloud and an interior point cloud generated using an exterior scanning machine and an interior scanning machine.
FIGS. 4A and 4B illustrate examples of space bodies that may be defined by a computing device based on point clouds.
FIG. 5 illustrates a table containing an example of a set of placement rules.
FIGS. 6A, 6B, and 6C illustrate example steps for determining gap types for a set of gaps surrounding a space body.
FIG. 7 illustrates example placements of building elements within a building model with respect to a space body.
FIG. 8 illustrates example placements of building elements within a building model with respect to a space body.
FIG. 9 illustrates a method for placing a set of building elements within a building model of a building.

In the appended figures, similar components and/or features may have the same numerical reference label. Further, various components of the same type may be distinguished by following the reference label with a letter or by following the reference label with a dash followed by a second numerical reference label that distinguishes among the similar components and/or features. If only the first numerical reference label is used in the specification, the description is applicable to any one of the similar components and/or features having the same first numerical reference label irrespective of the suffix.

### DETAILED DESCRIPTION

Embodiments of the present disclosure relate to producing space bodies and gaps for a building and using them to determine positioning and placement of building elements for that building. Placeable building elements may include consumer elements (e.g., a water tap), provider elements (e.g., a main water supply), and routing elements (e.g., a water pipe). The space bodies and gaps may be produced using an existing model of a building or by scanning the spaces within the building using, for example, a scanning device deployed at the building to scan and detect the interior and/or exterior surfaces of the building. Embodiments may then include the application of placement rules to the space bodies and gaps to determine possible placements of the building elements within a three-dimensional computer model of the building.

As used herein, the term "space body" may refer to a representation of a three-dimensional space or volume occupied by a particular room, closet, hallway, stairway, or other region within a building (or, in cases where an exterior space body is utilized, the three-dimensional space or volume outside of a building). As used herein, the term "gap" may refer to a representation of a three-dimensional space or volume between at least two space bodies. As such, gaps are dependent on space bodies and may be determined subsequent to determining the space bodies.

In some embodiments, the building elements that are to be placed/positioned within a building may be mechanical, electrical, and plumbing (MEP) elements. In some embodiments, MEP elements may include (1) MEP consumer elements, which may include, for example, heating, ventilation, and air conditioning (HVAC) registers (supply vents and return vents), electrical outlets, telecommunications outlets, water consumers, etc., (2) MEP provider elements, which may include, for example, HVAC units, electric panels, telecommunications main lines, main water supplies, main gas supplies, etc., and (3) MEP routing elements, which may include, for example, HVAC ducts, electrical wires, plumping pipes, etc.

Many benefits may be achieved by way of the present disclosure. For example, embodiments provide a fully automated system design in which building elements can be placed within a model within seconds rather than conventional approaches which take days or weeks. Embodiments further allow for thousands of building elements to be placed within a single model. Embodiments can provide a well-working balance to restrict infinite and continuous solution space to a discrete and sparse model to enable global combinatorial optimization. Other advantages of the present disclosure may be readily apparent to those skilled in the art.

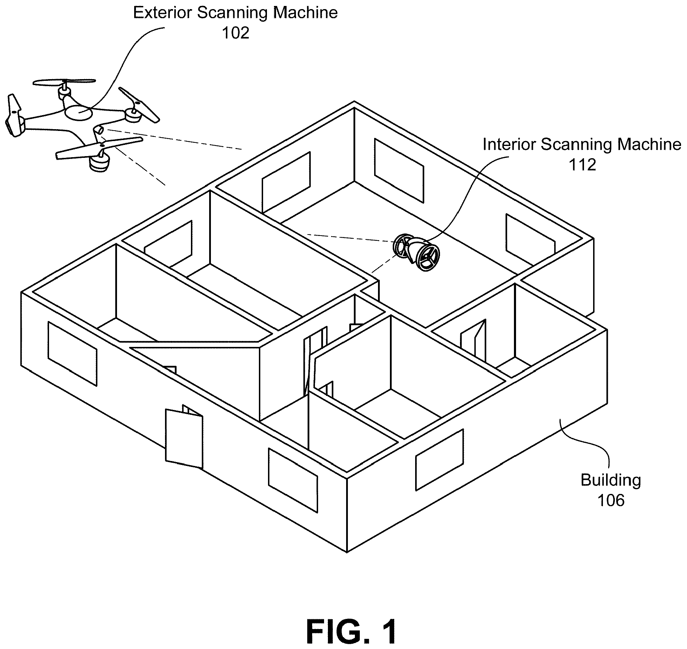

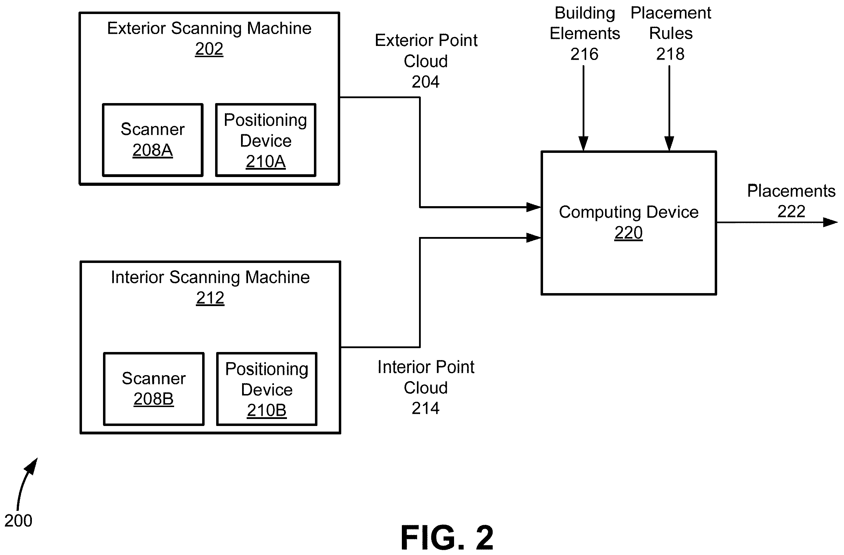

The figures herein follow a numbering convention in which the first digit or digits correspond to the figure number and the remaining digits identify an element or component in the figure. Similar elements or components between different figures may be identified by the use of similar digits. For example, 102 may reference element "02" in FIG. 1, and a similar element may be referenced as 202 in FIG. 2. As will be appreciated, elements shown in the various embodiments herein can be added, exchanged, and eliminated so as to provide a number of additional embodiments of the present disclosure. In addition, the proportion and the relative scale of the elements provided in the figures are intended to illustrate certain embodiments of the present disclosure and should not be taken in a limiting sense.

FIG. 1 illustrates a building 106 that is to be modeled, in accordance with some embodiments of the present disclosure. Although building 106 is depicted in FIG. 1 as a single floor structure, building 106 may include multiple floors, rooms, hallways, and may have a wide range of shape and size. For example, building 106 may include several floors and rooms positioned below or above ground level. In some embodiments, an exterior scanning machine 102 is used to generate an exterior point cloud 104 of the external surfaces of building 106. Each point of exterior point cloud 104 may be a three-dimensional coordinate that corresponds to an actual surface or object positioned on the exterior of building 106. As shown in FIG. 1, in some instances, exterior scanning machine 102 may be an autonomous computer-guided vehicle such as a drone configured to fly around building 106 and scan the exterior of building 106. In some instances, the movement of exterior scanning machine 102 is controlled by a user using a handheld operating device (e.g., a smartphone) or a workstation. The scanning functionality of exterior scanning machine 102 may be user-controlled or may be performed automatically when building 106 is in view of exterior scanning machine 102.

In a similar manner, an interior point cloud 114 may be generated by an interior scanning machine 112 by scanning the internal surfaces of building 106. Each point of interior point cloud 114 may be a three-dimensional coordinate that corresponds to an actual surface or object positioned within building 106, such as walls, floors, and ceilings. As shown in FIG. 1, in some instances, interior scanning machine 112 may be an autonomous computer-guided vehicle such as a drone configured to travel from room to room. The vehicle may be initialized with a floorplan of building 106, or may be programmed so as to iteratively search through building 106 such that each and every room is scanned. In other embodiments, or in the same embodiments, interior scanning machine 112 may be a mountable device, a self-standing device, or a portable electronic device that may be positioned inside a room by a user. In one example, a user may position interior scanning machine 112 near the center of a room and then cause the room to be scanned by interior scanning machine 112. In various embodiments, interior scanning machine 112 and exterior scanning machine 102 may be the same machine or different machines.

**FIG. 2** illustrates a system 200 for detection and construction of building models, in accordance with some embodiments of the present disclosure. In some embodiments, system 200 may include an exterior scanning machine 202 and an interior scanning machine 212 for generating an exterior point cloud 204 and an interior point cloud 214, respectively. Each of exterior scanning machine 202 and interior scanning machine 212 may include a scanner 208 and a positioning device 210, such as a global navigation satellite system (GNSS) receiver. Scanners 208 may employ any number of technologies for detecting depth of surroundings, such as an optical camera, an infrared camera, a light detection and ranging (LIDAR) sensor, and the like. In some instances, each of scanners 208 may be capable of determining a distance and a direction between the scanner and the point of the point cloud being generated. Positioning devices 210 may be configured to detect geospatial positions of the corresponding scanning machines, which may be used in conjunction with the distances and directions determined by scanners 208 to generate a three-dimensional coordinate for each point of exterior point cloud 204 and interior point cloud 214.

In some embodiments, each of positioning devices 210 may be a GNSS receiver that includes an antenna for receiving wireless signals and sending/routing a signal related to the wireless signals to a radio-frequency (RF) front end. The antenna may be linearly or circularly polarized, may be mounted or embedded, may be a single antenna or an array antenna, may have a narrow or wide bandwidth, among other possibilities. The RF front end may include a first band-pass filter for initially filtering out undesirable frequency components outside the frequencies of interest, a low-noise amplifier (LNA) for amplifying the received signal, a local oscillator and a mixer for down converting the received signal from RF to intermediate frequencies (IF), a second band-pass filter for removing frequency components outside IF, and an analog-to-digital (A/D) converter for sampling the received signal to generate digital samples.

Digital samples generated by the RF front end may be sent to a receiver processor. In some embodiments, the receiver processor performs one or more correlations on the digital samples using local codes to generate distance estimates between the GNSS receiver and various GNSS satellites. In some embodiments, one or more components of the receiver processor (such as, for example, one or more correlators) include specific pieces of hardware, such as an application-specific integrated circuit (ASIC) or a field-programmable gate array (FPGA). In some embodiments, operations performed by the receiver processor are performed entirely in software using digital signal processing (DSP) techniques. After generating the distance estimates, the receiver processor may perform trilateration to generate a position estimate for the GNSS receiver. After generating at least one position estimate, the receiver processor may output GNSS position data comprising a plurality of GNSS points (i.e., position estimates). Each of the plurality of GNSS points may be a three-dimensional coordinate corresponding to latitude, longitude, and elevation. In other embodiments, the three-dimensional coordinate may correspond to X, Y, and Z positions. The GNSS position data generated by the GNSS receiver may be outputted to other system components of exterior scanning machine 202 or interior scanning machine 212.

In some embodiments, system 200 includes a computing device 220 comprising one or more processors and an associated memory. Computing device 220 may receive exterior point cloud 204 from exterior scanning machine 202 and/or interior point cloud 214 from interior scanning machine 212 via one or more wired and/or wireless connections. Additionally, computing device 220 may receive a set of building elements 216 to be placed and a set of placement rules 218 that dictate how any of a wide range of possible building elements can be placed within a building model. As described herein, computing device 220 may produce space bodies and gaps using exterior point cloud 204 and/or interior point cloud 214 and may then produce a set of placements 222 for building elements 216 within a building model using the space bodies, the gaps, and placement rules 218.

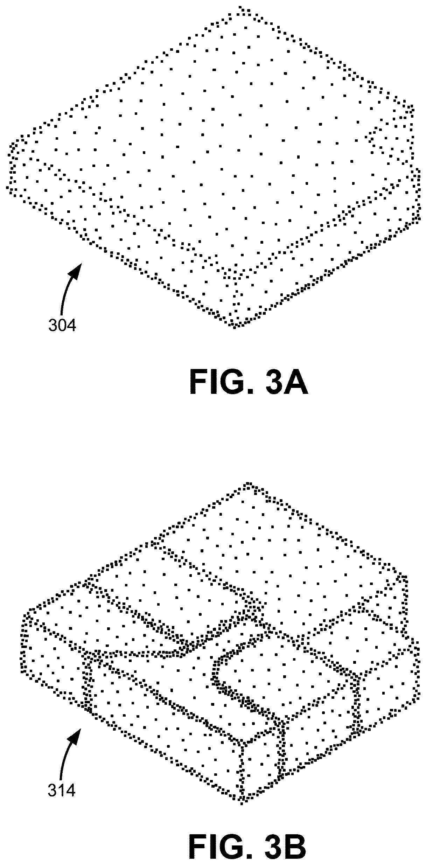

**FIGS. 3A** and **3B** illustrate examples of an exterior point cloud 304 and an interior point cloud 304 generated using an exterior scanning machine and an interior scanning machine, respectively, in accordance with some embodiments of the present disclosure. The density of points at different locations throughout the point clouds may vary based on the size and shape of the building and the position of the scanning machines. For example, in the specific implementation shown in FIGS. 3A and 3B, the density of points is greater along corners and interfaces between different surfaces.

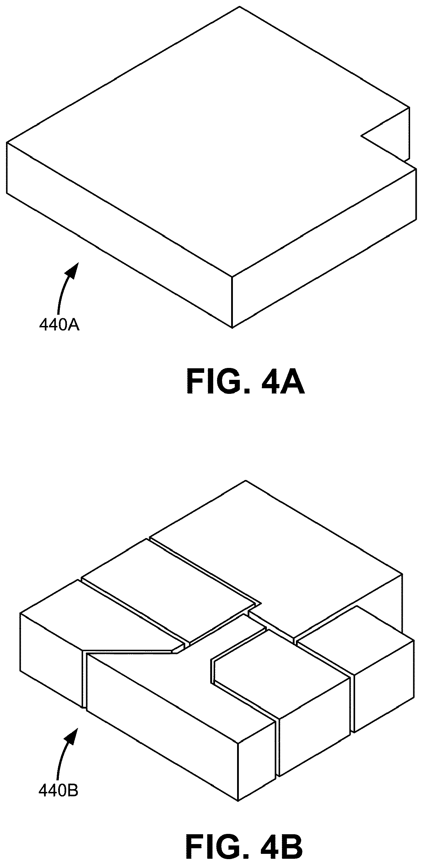

**FIGS. 4A** and **4B** illustrate examples of space bodies 440 that may be defined by a computing device based on point clouds, in accordance with some embodiments of the present disclosure. Specifically, an exterior space body 440A may be defined based on an exterior point cloud (such as exterior point cloud 304) and interior space bodies 440B may be defined based on an interior point cloud (such as interior point cloud 314) using a surface reconstruction technique. In some instances, exterior space body 440A is defined as a shell surrounding a building. In other embodiments, or in the same embodiments, exterior space body 440A is defined as a volume that extends infinitely in all directions and has an interior cavity whose shape is defined based on the exterior point cloud. In some embodiments, surface reconstruction is performed by building a network of triangles over the existing vertices of the point clouds. In other embodiments, or in the same embodiments, planar surfaces are constructed by averaging points with respect to a direction (e.g., averaging points with respect to the +x direction may result in a surface formed at x=2). Constructed surfaces may then be joined together to form each of space bodies 440.

In some embodiments, a plurality of gaps between space bodies 440 may be determined after defining space bodies 440 or concurrently with defining space bodies 440. In some embodiments, each of the plurality of gaps may be formed between a first and a second space body of space bodies 440. In some embodiments, a thickness of a particular gap of the plurality of gaps may be measured along a line that extends between the two nearest points between a first space body and a second space body of space bodies 440. In some embodiments, a thickness of a particular gap of the plurality of gaps may be measured along a line that extends between a randomly sampled point on a first space body of space bodies 440 and a nearest point of a second space body of space bodies 440.

In some embodiments, each of the plurality of gaps may be the three-dimensional space or volume between a first space body and a second space body of space bodies 440. For example, a particular gap of the plurality of gaps may be defined as the three-dimensional space or volume that is occupied by connecting all points of a surface of a first space body of space bodies 440 with all points of a surface of a second space body of space bodies 440. Alternatively, or additionally, a particular gap may be defined as the volume that is encompassed by connecting the edges of a surface of a first space body of space bodies 440 with a surface of a second space body of space bodies 440. Accordingly, the plurality of gaps may include one or more volumes having faces and edges. In some embodiments, the plurality of gaps may be restricted to be non-overlapping with each other or with any of space bodies 440.

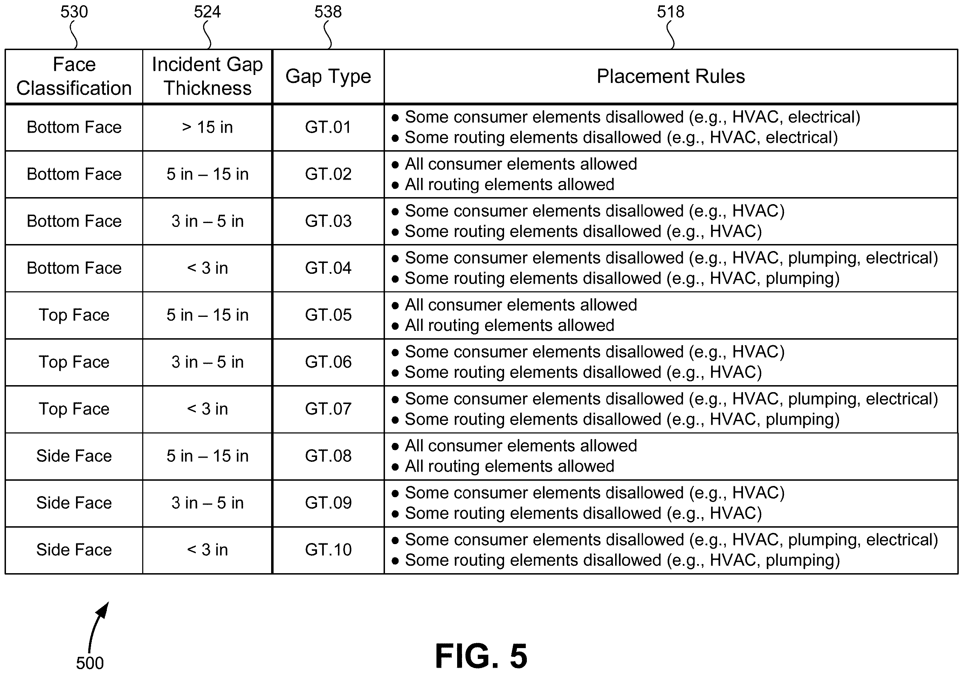

**FIG. 5** illustrates a table 500 containing an example of a set of placement rules 518, in accordance with some embodiments of the present disclosure. Placement rules 518 may dictate the manner in which building elements may be placed within a building model. In the example of FIG. 5, placement rules 518 vary for different face classifications 530 of a space body's faces and for different incident gap thicknesses 524. For example, for building elements that are to be placed with respect to a particular face of a space body (e.g., placed so as to intersect with the particular face or with the face's corresponding gap), the corresponding placement rules 518 can be retrieved for the particular face based on the face classification 530 for the face and the incident gap thickness 524 of the corresponding gap (i.e., the gap that interfaces with the particular face). The building elements can then be placed within the building model in accordance with the retrieved placement rules 518, i.e., so as to not violate the rules. In some embodiments, placement rules 518 may depend on the physical properties of the building elements to be placed, such as, for example, a particular building element's size, weight, reserved mounting, maintenance space, etc.

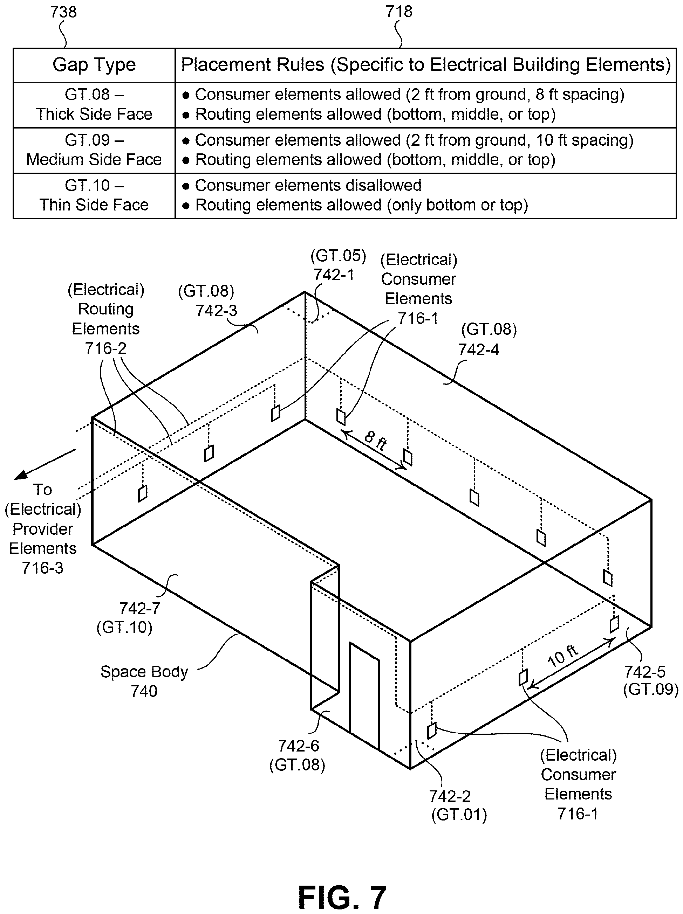

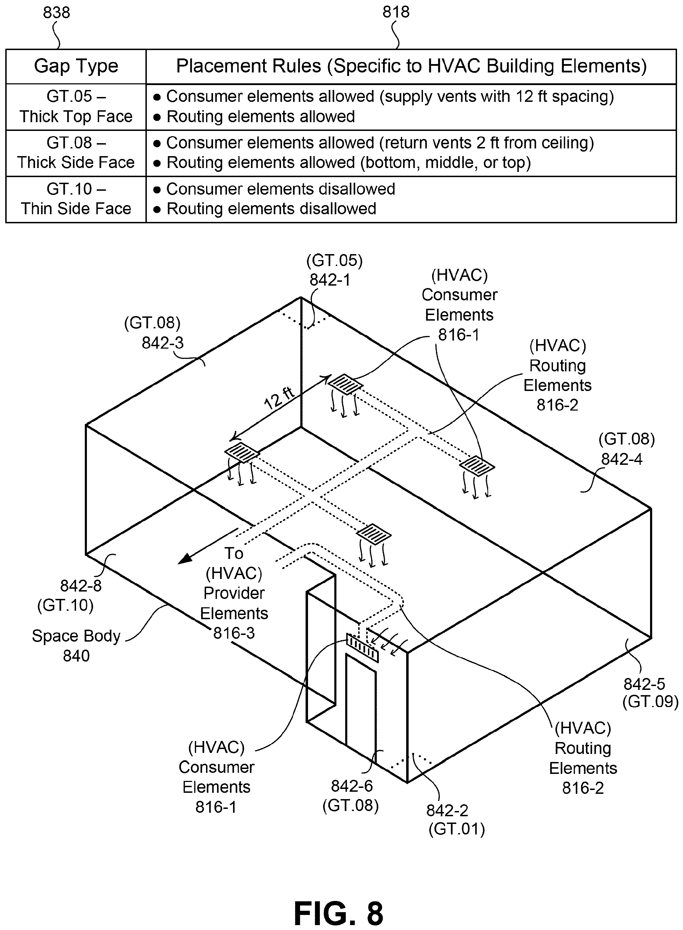

In some examples, a gap type 538 for the corresponding gap can be determined based on face classification 530 and incident gap thickness 524. Gap type 538 can be a helpful identifier for faces and gaps in the model as it can allow placement rules 518 as well as other more specific placement rules to be quickly retrieved (such as building element specific rules, as will be describe in reference to FIGS. 7 and 8). In the illustrated example, possible gap types include GT.01 (lowest bottom face), GT.02 (thick bottom face), GT.03 (medium bottom face), GT.04 (thin bottom face), GT.05 (thick top face),GT.06 (medium top face), GT.07 (thin top face), GT.08 (thick side face), GT.09 (medium side face), and GT. 10 (thin side face).

In various examples, a gap can have a single gap type 538 and a single set of corresponding placement rules 518, or multiple gap types 538 and multiple corresponding sets of placement rules 518. For example, consider a gap formed between a first space body for a first room and a second space body for a second room immediately above the first room. Based on the thickness of the gap, the gap may have gap types GT.02 and GT.05 (for incident gap thicknesses between 5 and 15 inches), gap types GT.03 and GT.06 (for incident gap thicknesses between 3 and 5 inches), or gap types GT.04 and GT.07 (for incident gap thicknesses less than 3 inches).

While table 500 lists placement rules 518 and gap types 538 for different incident gap thicknesses 524, in some embodiments other physical characteristics or properties of the gaps can be considered for different and/or more specific gap types 538 and placement rules 518. For example, in some embodiments, calculations such as gap angle, gap height, or gap length may be considered, where the gap angle may be defined as the angle between the line normal to the corresponding face and a predetermined axis, and where the gap height and gap length are defined as the distances along an axis that is orthogonal to the line normal to the corresponding face or along a predetermined axis (e.g., the vertical axis).

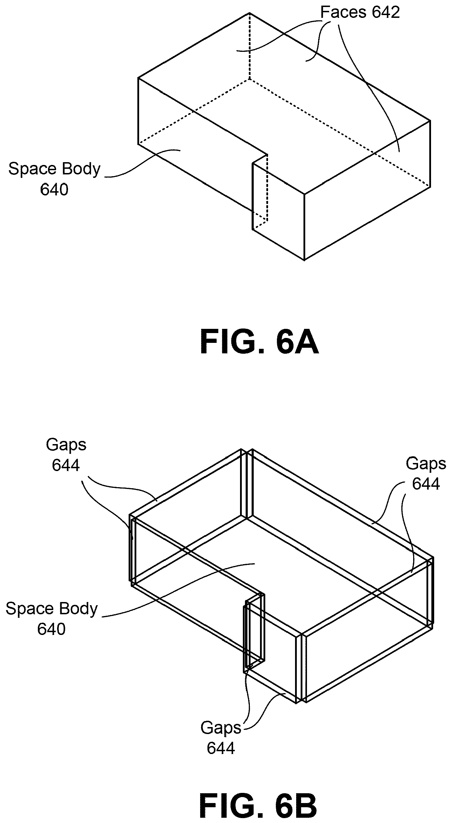

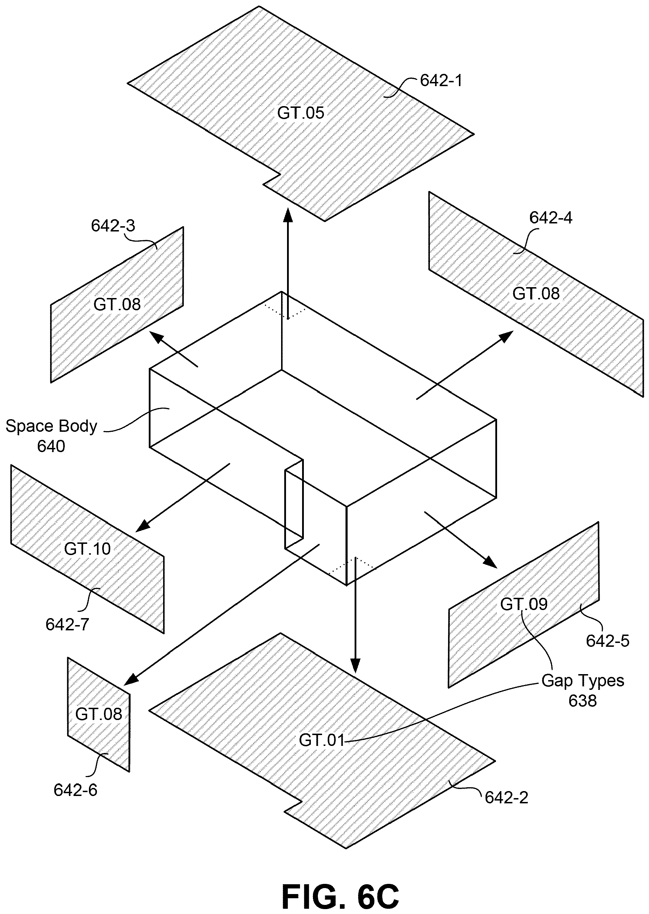

**FIGS. 6A**, **6B****,** and **6C** illustrate example steps for determining gap types 638 for a set of gaps 644 surrounding a space body 640, in accordance with some embodiments of the present disclosure. At FIG. 6A, a single space body 640 and its set of faces 642 are identified from a set of space bodies, such as space bodies 440 in FIGS. 4A and 4B. At FIG. 6B, gaps 644 surrounding space body 640 are formed based on the separation between space body 640 and the neighboring space bodies, with each of gaps 644 interfacing with one of the faces 642 of space body 640. Gaps 644 that interface with the top face and the bottom face of space body 640 are not shown in FIG. 6B for the purpose of clarity.

At FIG. 6C, gap types 638 are determined for gaps 644 and their corresponding faces 642 based on the face classifications for faces 642 and the incident gap thicknesses of gaps 644. In the illustrated example, the gap at face 642-1 has gap type GT.05 (thick top face), the gap at face 642-2 has gap type GT.01 (lowest bottom face), the gap at face 642-3 has gap type GT.08 (thick side face), the gap at face 642-4 has gap type GT.08 (thick side face), the gap at face 642-5 has gap type GT.09 (medium side face), the gap at face 642-6 has gap type GT.08 (thick side face), and the gap at face 642-7 has gap type GT. 1 0 (thin side face). In some examples, a single face can be divided into two or more subfaces when the incident gap thickness varies across the single face. In such examples, each subface can have different gap types and therefore different placement rules.

**FIG. 7** illustrates example placements of building elements 716 within a building model with respect to a space body 740, in accordance with some embodiments of the present disclosure. Similar to that described in reference to FIG. 2, a set of building elements 716 and a set of placement rules 718 may be received at a computing device that is configured to calculate space bodies and gaps for placing building elements 716 within a building model in accordance with placement rules 718. In order to determine which placement rules 718 are applicable at different faces 742 and gaps associated with space body 740, a gap type 738 may be determined for each of the gaps based on the face classification for the corresponding face and the thickness of the gap (or other physical characteristic of the gap, such as height, width, or angle).

In the illustrated example, electrical building elements 716 are to be placed with respect to space body 740, which include electrical consumer elements 716-1 (e.g., electrical outlets), electrical routing elements 716-2 (e.g., wires), and electrical provider elements 716-3 (e.g., electric panels). The computing device may determine that the gap at face 742-3 has gap type GT.08 based on the face classification for face 742-3 (side face) and the thickness of the gap (between 5 and 15 inches). The computing device may then determine that placement rules 718 specify that consumer elements 716-1 are to be placed 2 feet from the ground and with 8 feet spacing, and that routing elements 716-2 may be placed along the bottom, middle, and/or top of the gap (note that in some examples placement rules for routing elements may vary based on the physical properties of the routing elements, i.e., their size, weight, mounting space, etc.). Similarly, the computing device may determine that the gap at face 742-4 has gap type GT.08 and may place consumer elements 716-1 2 feet from the ground with 8 feet spacing, with routing elements 716-2 placed along the bottom, middle, and/or top of the gap.

The computing device may determine that the gap at face 742-5 has gap type GT.09 based on the face classification for face 742-5 (side face) and the thickness of the gap (between 3 and 5 inches). The computing device may then determine that placement rules 718 specify that consumer elements 716-1 are to be placed 2 feet from the ground and with 10 feet spacing, and that routing elements 716-2 may be placed along the bottom, middle, and/or top of the gap. To place routing elements 716-2 so as to connect consumer elements 716-1 with provider elements 716-3, the computing device may search the gaps surrounding space body 740 to identify the shortest route. Since the gaps at faces 742-6 and 742-7 have gap types GT.08 and GT. 10, respectively, that each allow for routing elements 716-2 to be placed, a path for routing elements 716-2 may be found passing through these gaps in accordance with the relevant placement rules 718 as shown (e.g., gap type GT.10 allows for routing elements to be placed only along the top or bottom of the gap, whereas gap type GT.08 allows for placement along bottom, middle, or top).

**FIG. 8** illustrates example placements of building elements 816 within a building model with respect to a space body 840, in accordance with some embodiments of the present disclosure. Similar to that described in reference to FIG. 2, a set of building elements 816 and a set of placement rules 818 may be received at a computing device that is configured to calculate space bodies and gaps for placing building elements 816 within a building model in accordance with placement rules 818. In order to determine which placement rules 818 are applicable at different faces 842 and gaps associated with space body 840, a gap type 838 may be determined for each of the gaps based on the face classification for the corresponding face and the thickness of the gap (or other physical characteristic of the gap, such as height, width, or angle).

In the illustrated example, HVAC building elements 816 are to be placed with respect to space body 840, which include HVAC consumer elements 816-1 (e.g., HVAC registers including supply vents and return vents), HVAC routing elements 816-2 (e.g., HVAC ducts), and HVAC provider elements 816-3 (e.g., HVAC units). The computing device may determine that the gap at face 842-1 has gap type GT.05 based on the face classification for face 842-1 (top face) and the thickness of the gap (between 5 and 15 inches). The computing device may then determine that placement rules 818 specify that consumer elements 816-1 (supply vents) are to be placed along the top face (ceiling) with 12 feet spacing in a grid-like pattern, and that routing elements 816-2 (supply ducts) may be placed within the gap. The computing device may determine that the gap at face 842-6 has gap type GT.08 based on the face classification for face 842-6 (side face) and the thickness of the gap (between 5 and 15 inches). The computing device may then determine that placement rules 818 specify that consumer elements 816-1 (return vents) are to be placed along the wall at 2 feet from the top face (ceiling), and that routing elements 816-2 (return ducts) may be placed within the gap.

The computing device may attempt to find a path for routing elements 816-2 to connect the return vent with provider elements 816-3. While searching for a possible path, the computing device may determine that the gap at face 842-8 has gap type GT. 10 based on the face classification for face 842-8 (side face) and the thickness of the gap (less than 3 inches), and may then determine that placement rules 818 specify that routing elements 816-2 are not allowed in the gap for face 842-8. The computing device may instead find a shortest path for the return duct through the gap for face 842-1, which has gap type GT.05 allowing the path for routing elements 816-2 to be placed.

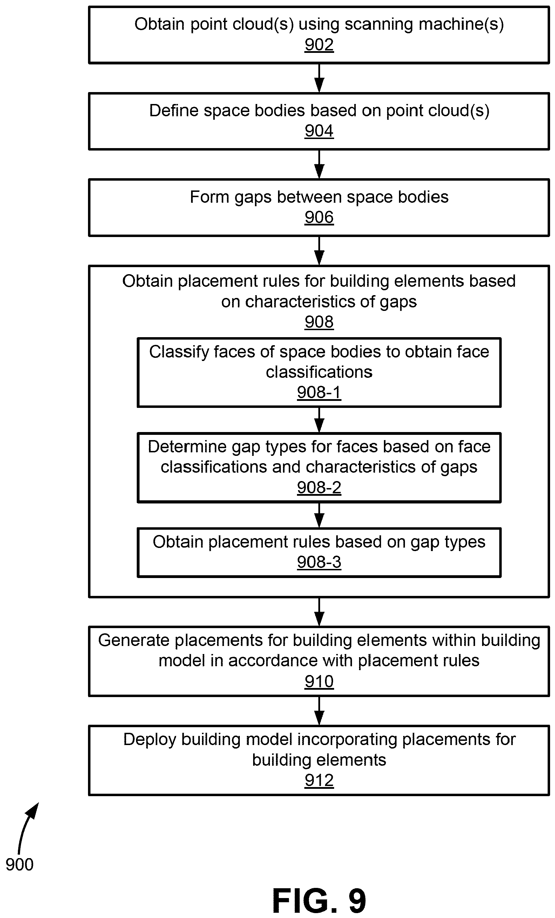

**FIG. 9** illustrates a method 900 for placing a set of building elements (e.g., building elements 216, 716, 816) within a building model of a building (e.g., building 106), in accordance with some embodiments of the present disclosure. Steps of method 900 need not be performed in the order shown, and not all steps of method 900 need be performed during performance of method 900. In some embodiments, one or more steps of method 900 may be performed by one or more processors of a computing device (e.g., computing device 120).

At step 902, one or more point clouds are obtained using one or more scanning machines. In some examples, an interior point cloud (e.g., interior point clouds 214, 314) may be obtained using an interior scanning machine (e.g., interior scanning machines 112, 212) by scanning at least one room of the building. In some examples, an exterior point cloud (e.g., exterior point clouds 204, 304) may be obtained using an exterior scanning machine (e.g., exterior scanning machines 102, 202) by scanning an exterior of the building. In some examples, the interior scanning machine and the exterior scanning machine are the same scanning machine. In some examples, the interior scanning machine and the exterior scanning machine are different scanning machines.

At step 904, a set of space bodies (e.g., space bodies 440, 640, 740, 840) within the building are defined. Each of the set of space bodies may represent a non-overlapping volume within the building such that each of the set of space bodies may be non-overlapping with each other of the set of space bodies. Each of the set of space bodies may have a finite number of planar or curved surfaces that enclose the volume. In some instances, a surface of a first space body from the set of space bodies may be separated from a surface of a second space body from the set of space bodies by a gap or a set of different gaps. In some examples, the set of space bodies are defined using the one or more point clouds, which may then, in some examples, be used to construct the building model for the building. In some examples, the set of space bodies may be defined using a previously constructed building model (e.g., an architectural model). For example, the previously constructed building model may be analyzed to define the size, shape, and position of each of the plurality of space bodies.

At step 906, a set of gaps (e.g., gaps 644) are formed between the plurality of space bodies. Each of the set of gaps may be a volume between two or more space bodies from the set of space bodies. In some examples, each of the set of gaps is the volume formed by connecting all edges of a face of a first space body with corresponding edges of a face of a second space body. In some examples, each of the set of gaps is the volume formed by connecting all points along a face of a first space body with all points of a face of a second space body. In some examples, each of the set of gaps is the volume formed by connecting all points of a first space body with all points of a second space body. In some instances, for two space bodies that are considered to be neighboring (e.g., within a threshold distance of each other), the two space bodies may be projected onto each other to form one or more of the set of gaps. Other possibilities are contemplated.

At step 908, a set of placement rules (e.g., placement rules 518, 718, 818) for the set of building elements are obtained based on physical characteristics of the set of gaps. In some examples, the set of placement rules may be obtained from a set of global placement rules that are searchable and retrievable based on the physical characteristics of the set of gaps. In various examples, the physical characteristics of the set of gaps includes one or more of: a gap thickness, a gap height, a gap length, a gap angle, etc. In one example, a first placement rule may be retrieved for a first gap based on the first gap having a first gap thickness, and a second placement rule (different than the first placement rule) may be retrieved for a second gap based on the second gap having a second gap thickness (different than the first gap thickness).

In some examples, at substep 908-1, a set of faces (e.g., faces 642, 742, 842) of the set of space bodies are classified to obtain a set of face classifications (e.g., face classifications 530). The set of face classifications may include one or more of: a bottom face, a top face, a side face, etc. In some examples, the set of placement rules can be obtained based on one or both of (i) the physical characteristics of the set of gaps and (ii) the set of face classifications. In one example, a first placement rule may be retrieved for a first gap based on the first gap having a first gap thickness and a first face classification, and a second placement rule (different than the first placement rule) may be retrieved for a second gap based on the second gap having a second gap thickness (same as the first gap thickness) and a second face classification (different than the first face classification). In some examples, at substep 908-2, gap types (e.g., gap types 538, 638) are determined for the set of gaps based on the set of face classifications and/or the physical characteristics of the set of gaps. In some examples, at substep 908-3, the set of placement rules can be obtained using the gap types for the set of gaps. For example, the set of placement rules can be indexed by the gap types to facilitate retrieval of the set of placement rules, and/or can be classified by different media types (e.g., water, gas, air, etc.) or by other building element classifications (e.g., 12-gauge wire, 14-gauge wire, etc.).

At step 910, a set of placements (e.g., placements 222) for the set of building elements within the building model are generated. Each of the set of placements may include a position, orientation, and/or configuration of one of the set of building elements within the building model. In one example, a first placement for a first building element (e.g., an electrical outlet) may include a three-dimensional position and a three-dimensional orientation of the first building element within the building model, and a second placement for a second building element (e.g., a ceiling light) may include a three-dimensional position and a three-dimensional orientation of the second building element within the building model.

In some examples, the set of building elements may include MEP elements. In some examples, the set of building elements may include a combination of MEP consumer elements, MEP provider elements, and/or MEP routing elements. In some examples, the set of placements may include a plurality of positions and a plurality of orientations for MEP routing elements. In one example, the set of placements may include multiple positions that define a path for MEP routing elements, such as a path for HVAC ducts or an electrical wire. Multiple paths can be combined to form connected systems.

At step 912, the building model incorporating the set of placements for the set of building elements may be deployed. In various examples, deploying the building model may include one or more of: transmitting the building model to a construction server, uploading the building model to the construction server, running a simulation using the building model to produce a simulation result (the simulation result being, for example, a lighting simulation result, a thermal simulation result, such as a temperature, a temperature gradient, or a heat flux for one or more locations within the building model), causing an operation to be performed related to the placement of the set of building elements at the set of placements, among other possibilities. In some examples, the building model incorporating the set of placements may be manually adjusted or otherwise modified in a computer-aided design (CAD) or computer-aided engineering (CAE) system.

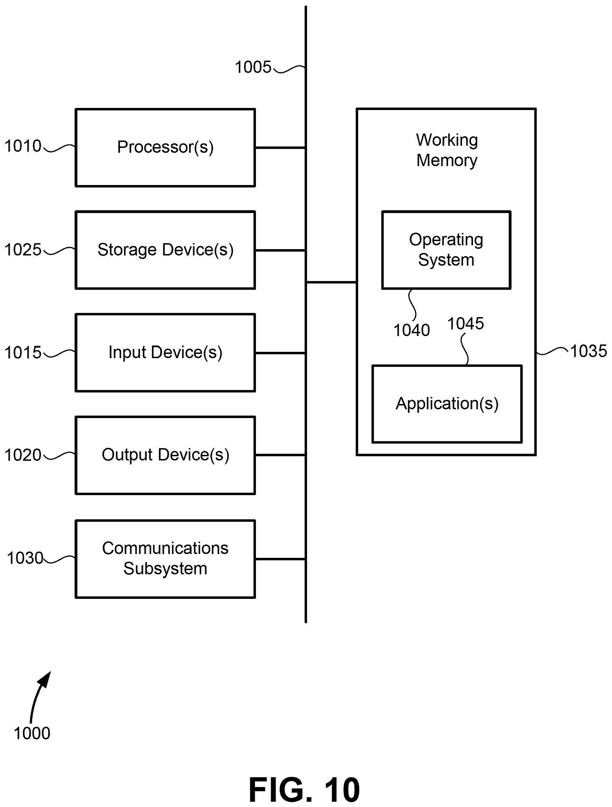

**FIG. 10** illustrates a simplified computer system, in accordance with some embodiments of the present disclosure. Computer system 1000 as illustrated in FIG. 10 may be incorporated into devices such as computing device 220 or some other device described herein. FIG. 10 provides a schematic illustration of one embodiment of a computer system 1000 that can perform some or all of the steps of the methods provided by various embodiments. It should be noted that FIG. 10 is meant only to provide a generalized illustration of various components, any or all of which may be utilized as appropriate. FIG. 10, therefore, broadly illustrates how individual system elements may be implemented in a relatively separated or more integrated manner.

Computer system 1000 is shown comprising hardware elements that can be electrically coupled via a bus 1005, or may otherwise be in communication, as appropriate. The hardware elements may include one or more processors 1010, including without limitation one or more general-purpose processors and/or one or more special-purpose processors such as digital signal processing chips, graphics acceleration processors, and/or the like; one or more input devices 1015, which can include, without limitation a mouse, a keyboard, a camera, and/or the like; and one or more output devices 1020, which can include, without limitation a display device, a printer, and/or the like.

Computer system 1000 may further include and/or be in communication with one or more non-transitory storage devices 1025, which can comprise, without limitation, local and/or network accessible storage, and/or can include, without limitation, a disk drive, a drive array, an optical storage device, a solid-state storage device, such as a random access memory ("RAM"), and/or a read-only memory ("ROM"), which can be programmable, flashupdateable, and/or the like. Such storage devices may be configured to implement any appropriate data stores, including without limitation, various file systems, database structures, and/or the like.

Computer system 1000 might also include a communications subsystem 1030, which can include, without limitation a modem, a network card (wireless or wired), an infrared communication device, a wireless communication device, and/or a chipset such as a Bluetooth^{™} device, an 802.11 device, a WiFi device, a WiMax device, cellular communication facilities, etc., and/or the like. The communications subsystem 1030 may include one or more input and/or output communication interfaces to permit data to be exchanged with a network such as the network described below to name one example, to other computer systems, and/or any other devices described herein. Depending on the desired functionality and/or other implementation concerns, a portable electronic device or similar device may communicate image and/or other information via the communications subsystem 1030. In other embodiments, a portable electronic device, e.g. the first electronic device, may be incorporated into computer system 1000, e.g., an electronic device as an input device 1015. In some embodiments, computer system 1000 will further comprise a working memory 1035, which can include a RAM or ROM device, as described above.

Computer system 1000 also can include software elements, shown as being currently located within the working memory 1035, including an operating system 1040, device drivers, executable libraries, and/or other code, such as one or more application programs 1045, which may comprise computer programs provided by various embodiments, and/or may be designed to implement methods, and/or configure systems, provided by other embodiments, as described herein. Merely by way of example, one or more procedures described with respect to the methods discussed above can be implemented as code and/or instructions executable by a computer and/or a processor within a computer; in an aspect, then, such code and/or instructions can be used to configure and/or adapt a general purpose computer or other device to perform one or more operations in accordance with the described methods.

A set of these instructions and/or code may be stored on a non-transitory computer-readable storage medium, such as the storage device(s) 1025 described above. In some cases, the storage medium might be incorporated within a computer system, such as computer system 1000. In other embodiments, the storage medium might be separate from a computer system e.g., a removable medium, such as a compact disc, and/or provided in an installation package, such that the storage medium can be used to program, configure, and/or adapt a general purpose computer with the instructions/code stored thereon. These instructions might take the form of executable code, which is executable by Computer system 1000 and/or might take the form of source and/or installable code, which, upon compilation and/or installation on Computer system 1000 e.g., using any of a variety of generally available compilers, installation programs, compression/decompression utilities, etc., then takes the form of executable code.

It will be apparent to those skilled in the art that substantial variations may be made in accordance with specific requirements. For example, customized hardware might also be used, and/or particular elements might be implemented in hardware or software including portable software, such as applets, etc., or both. Further, connection to other computing devices such as network input/output devices may be employed.

As mentioned above, in one aspect, some embodiments may employ a computer system such as computer system 1000 to perform methods in accordance with various embodiments of the technology. According to a set of embodiments, some or all of the procedures of such methods are performed by computer system 1000 in response to processor 1010 executing one or more sequences of one or more instructions, which might be incorporated into the operating system 1040 and/or other code, such as an application program 1045, contained in the working memory 1035. Such instructions may be read into the working memory 1035 from another computer-readable medium, such as one or more of the storage device(s) 1025. Merely by way of example, execution of the sequences of instructions contained in the working memory 1035 might cause the processor(s) 1010 to perform one or more procedures of the methods described herein. Additionally or alternatively, portions of the methods described herein may be executed through specialized hardware.

The terms "machine-readable medium" and "computer-readable medium," as used herein, refer to any medium that participates in providing data that causes a machine to operate in a specific fashion. In an embodiment implemented using computer system 1000, various computer-readable media might be involved in providing instructions/code to processor(s) 1010 for execution and/or might be used to store and/or carry such instructions/code. In many implementations, a computer-readable medium is a physical and/or tangible storage medium. Such a medium may take the form of a non-volatile media or volatile media. Non-volatile media include, for example, optical and/or magnetic disks, such as the storage device(s) 1025. Volatile media include, without limitation, dynamic memory, such as the working memory 1035.

Common forms of physical and/or tangible computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, EPROM, a FLASH-EPROM, any other memory chip or cartridge, or any other medium from which a computer can read instructions and/or code.

Various forms of computer-readable media may be involved in carrying one or more sequences of one or more instructions to the processor(s) 1010 for execution. Merely by way of example, the instructions may initially be carried on a magnetic disk and/or optical disc of a remote computer. A remote computer might load the instructions into its dynamic memory and send the instructions as signals over a transmission medium to be received and/or executed by computer system 1000.

The communications subsystem 1030 and/or components thereof generally will receive signals, and the bus 1005 then might carry the signals and/or the data, instructions, etc. carried by the signals to the working memory 1035, from which the processor(s) 1010 retrieves and executes the instructions. The instructions received by the working memory 1035 may optionally be stored on a non-transitory storage device 1025 either before or after execution by the processor(s) 1010.

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of exemplary configurations including implementations. However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process which is depicted as a schematic flowchart or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the technology. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes a plurality of such users, and reference to "the processor" includes reference to one or more processors and equivalents thereof known to those skilled in the art, and so forth.

Also, the words "comprise", "comprising", "contains", "containing", "include", "including", and "includes", when used in this specification and in the following claims, are intended to specify the presence of stated features, integers, components, or steps, but they do not preclude the presence or addition of one or more other features, integers, components, steps, acts, or groups.

## Claims

1. A computer-implemented method of placing a set of building elements within a building model, the method comprising:
defining a set of space bodies within a building, wherein each of the set of space bodies represents a non-overlapping volume within the building;
forming a set of gaps between the set of space bodies;
obtaining a set of placement rules for the set of building elements based on physical characteristics of the set of gaps; and
generating a set of placements for the set of building elements within the building model in accordance with the set of placement rules.

2. The method of claim 1, wherein the physical characteristics of the set of gaps include thicknesses of the set of gaps.

3. The method of claim 1 or 2, wherein obtaining the set of placement rules includes:
classifying a set of faces of the set of space bodies to obtain a set of face classifications; and
obtaining the set of placement rules for the set of building elements based on both (i) the physical characteristics of the set of gaps and (ii) the set of face classifications.

4. The method of any one of the preceding claims, further comprising:
obtaining an interior point cloud using an interior scanning machine, the interior point cloud having been generated using the interior scanning machine by scanning at least one room of the building, wherein the set of space bodies are defined using the interior point cloud.

5. The method of claim 4, further comprising:
obtaining an exterior point cloud using an exterior scanning machine, the exterior point cloud having been generated using the exterior scanning machine by scanning an exterior of the building, wherein the set of space bodies are defined further using the exterior point cloud.

6. The method of claim 5, wherein the interior scanning machine and the exterior scanning machine are different scanning machines.

7. The method of claim 1, further comprising:
receiving an existing building model, wherein the set of space bodies are defined by analyzing the existing building model.

8. A system for placing a set of building elements within a building model, the system comprising:
one or more processors; and
a non-transitory computer-readable medium comprising instructions that, when executed by the one or more processors, cause the one or more processors to perform the method of any one of the preceding claims.

9. A non-transitory computer-readable medium comprising instructions that, when executed by a processor, cause the processor to perform the method of any one of claims 1-7.
